## Europäisches Patentamt

(19) **European Patent Office**

**Office européen des brevets**

(11) Veröffentlichungsnummer: **0 076 395**

**B1**

(12) **EUROPÄISCHE PATENTSCHRIFT**

(45) Veröffentlichungstag der Patentschrift:
10.06.87

(21) Anmeldenummer: **82108417.5**

(22) Anmeldetag: **13.09.82**

(51) Int. Cl.⁴: **C 08 L 27/06,** C 08 L 33/06, C 09 D 3/76, C 09 J 3/14

(54) **Dispersionen von feinteiligen Kunstharzen in Weichmachern.**

(30) Priorität: **29.09.81 DE 3138625**

(43) Veröffentlichungstag der Anmeldung:
**13.04.83 Patentblatt 83/15**

(45) Bekanntmachung des Hinweises auf die Patenterteilung:
**10.06.87 Patentblatt 87/24**

(84) Benannte Vertragsstaaten:
**AT BE CH DE FR GB IT LI NL SE**

(56) Entgegenhaltungen:
**DE-A-1 569 138**
**DE-A-2 928 928**
**FR-A-1 314 751**

(73) Patentinhaber: **BASF Lacke + Farben Aktiengesellschaft, Max- Winkelmann- Strasse 80, D-4400 Münster (DE)**

(72) Erfinder: **Blum, Rainer, Bannwasserstrasse 58, D-6700 Ludwigshafen- Edigheim (DE)**
Erfinder: **Lehner, August, Wachenheimer Strasse 13, D-6701 Rödersheim (DE)**
Erfinder: **Rubbert, Bernhard, Dahlweg 20, D-4400 Münster (DE)**

(74) Vertreter: **Habbel, Hans- Georg, Dipl.- Ing., Postfach 3429 Am Kanonengraben 11, D-4400 Münster (DE)**

**0 076 395**

## Beschreibung

Die vorliegende Erfindung betrifft Dispersionen aus feinteiligen Kunstharzen gemäß dem Oberbegriff des Hauptanspruches.

Plastisole sind fließfähige oder pastöse Massen, die beim Erwärmen auf höhere Temperatur gelieren und nach dem Abkühlen eine feste, zähelastische Masse bilden.

Für die Beschichtung lackierter Flächen, z.B. grundierter Automobilkarosserien mit Plastisolen, werden als Haftvermittler spezielle organische Basen vorgeschlagen. Polyaminverbindungen werden z.B. in der DE-A-2 232 885, Verbindungen aus der Klasse der Schiffschen Basen in der DE-A-2 512 366 und Imidazole in der DE-A-2 327 958 vorgeschlagen.

Zum Aufbau der in diesen Patentanmeldungen beschriebenen organischen Basen werden die verschiedensten Reaktionen beschrieben. Nach der DE-A-2 512 366 werden geeignete harnstoff- und urethangruppenhaltige Schiffsche Basen z.B. dadurch erhalten, daß Additionsprodukte aus Isophoron-diisocyanat und Trimethylolpropan mit den Kondensationsprodukten aus Diäthylentriamin mit Methylisobutylketon zur Reaktion gebracht werden.

Plastisole finden vielseitig Verwendung, z.B. zur Herstellung von Folien und Formkörpern und für Beschichtungen sowie zur Bildung von schalldämpfenden und gegen Korrosion und Steinschlag schützenden Überzügen auf Metallen, z.B. für Klimaschächte und Metalltüren. Ein weiteres sehr wichtiges Anwendungsgebiet ist die Verwendung als Metallverklebungsmittel, für Nahtabdichtungen und als Unterbodenschutz von Kraftfahrzeugen.

Gemeinsam ist den meisten Anwendungen, daß pastöse Massen, mit Methoden wie sie für die Verteilung von Flüssigkeiten bekannt sind, zu relativ dicken Schichten verarbeitet werden, z.B. mittels Schleuderguß zur Herstellung von Formkörpern, mittels Rakel- oder Streichauftrag auf Faserfliese zur Herstellung von Kunstleder und mittels airless-Spritzauftrag zur Ausbildung der Unterbodenschutzbelage an Automobilen.

Voraussetzung für diese Art der Verarbeitung ist ein sehr ausgeprägtes strukturviskoses bis thixotropes Fließverhalten der Plastisole, welches bewirkt, daß diese sich unter der Scherbeanspruchung des Auftrages leicht verteilen lassen, nach dem Auftrag im Ruhestand aber sehr schnell eine hohe Viskosität aufbauen.

Dieses Viskositätsverhalten einzustellen wird mit vielen Methoden versucht, z.B. Auswahl der Füllstoffe und des PVC's nach Korngröße und -form, Auswahl der Weichmacher, Zusatz von Lösungsmitteln und durch viskositätsregelnde Zuschlagstoffe, z.B. organisch modifizierte Montmorillonite, feinteiliges durch Flammhydrolyse hergestelltes amorphes Siliciumdioxid, Seifen mehrwertiger Metalle, wie Aluminiumoleat oder Calciumrhizinoleat u.a.

Besonders erschwert wird die Einstellung des gewünschten strukturvisko-thixotropen Fließverhaltens in Gegenwart der in den oben angeführten Schriften vorgeschlagenen organisch-basischen Haftvermittlern, weil diese als Struktur- bzw. Thixotropiebrecher wirken.

Gemäß der gattungsbildenden DE-A-2 928 928 hat man bereits versucht, das Fließverhalten der Plastisole durch Zusatz eines isocyanatgruppenfreien Umsetzungsproduktes einer Polyaminverbindung mit einem Polyisocyanat zu verbessern.

Diese Produkte liefern zwar schon ein besseres Ergebnis gegenüber den Produkten des damaligen Standes der Technik, jedoch ließ die Reproduzierbarkeit der Ergebnisse doch zu wünschen übrig. Das lag daran, daß nur Polyisocyanate und Polyamine miteinander umgesetzt wurden, mit dem Ziele, möglichst hochmolekulare und hochvernetzte Produkte zu schaffen, da nur solche Produkte zur Gelbindung neigen und eine Verdickung des Lackes bewirken. Jedoch sind die Schwankungen in der statistischen Zusammensetzung dieser Gelteilchen zu groß, so daß die gleichen Ergebnisse hinsichtlich einer Strukturviskosität oder Thixotropie, wie sie für das Spritzen dicker Schichten an senkrechten Flächen notwendig sind, nicht immer erhalten werden. Gerade in der Praxis ist es aber wichtig, insbesondere wenn mit Spritzautomaten gearbeitet wird, immer Materialien mit gleichmäßigen Eigenschaften, die keiner Schwankungsbreite unterliegen, zu verarbeiten.

Aufgabe der Erfindung ist es, Plastisole, d.h. Dispersionen von feinteiligen Kunstharzen in Weichmachern mit verbesserten Verarbeitungseigenschaften hinsichtlich ihres Fließverhaltens zu schaffen, die eine verbesserte Haftfestigkeit auf dem zu beschichtenden Substrat aufweisen.

Diese Aufgabe wird dadurch gelöst, daß die gattungsbildenden Kunstharze 0,01 bis 30 Gew.-%, bezogen auf die Summe der Gewichtsmengen an Kunstharz und Weichmacher, eines isocyanatgruppenfreien Umsetzungsproduktes

a) eines Monoamins, ggf. in Kombination mit einer Polyamin-Verbindung mit einem Monoisocyanat und/oder Polyisocyanat oder

b) einer Polyamin-Verbindung mit einem Monoisocyanat, ggf. in Kombination mit einem Polyisocyanat enthalten.

Der Zusatz der beanspruchten Umsetzungsprodukte bewirkt in Plastisolen eine außerordentlich hohe Verdickung, die unter Scherbeanspruchung rasch ab- und nach Beendigung der Scherung rasch auch wieder aufgebaut wird. Gegenüber den Umsetzungsprodukten gemäß der DE-AS 2 928 928 haben die erfindungsgemäß verwendeten Umsetzungsprodukte den Vorteil, daß sie in ihrem Molekulargewicht variiert werden können und das sowohl die Monoisocyanate als auch die Monoamine als Kettenabbruchmittel eingesetzt werden und die jeweilige Molekülgröße je nach der gewünschten Verdickung steuern können.

Außerdem wirken die erfindungsgemäß zu verwendenden Umsetzungsprodukte als ausgezeichnete Haftvermittler in den Dispersionen.

2

# 0 076 395

Die gewünschte Art der Thixotropierung und auch die Haftvermittlerwirkung kann noch dadurch variiert werden, daß die erfindungsgemäßen Dispersionen zusätzlich ein isocyanatfreies Umsetzungsprodukt einer Polyaminverbindung mit einem Polyisocyanat enthalten.

Zu den die erfindungsgemäßen Plastisole aufbauenden Einzelkomponenten ist folgendes zu sagen.

Als feinteilige Kunstharze kommen sowohl Vinylchloridhomopolymerisate als auch Copolymerisate des Vinylchlorids mit Vinylidenchlorid, Vinylestern von 2 bis 10 Kohlenstoffatome enthaltenden Carbonsäuren, wie Vinylacetat, Vinylpropionat und Versaticsäurevinylester, sowie Acrylathomo- und -copolymerisate, wie Polymerisate und Copolymerisate von Acrylsäureestern von 1 bis 18 Kohlenstoffatome enthaltenden Alkoholen, oder Polymerisate und Copolymerisate von Methacrylsäureestern von 1 bis 18 Kohlenstoffatome enthaltenden Monoalkoholen, wie z.B. Polymerisate des Methacrylsäuremethylesters oder Methacrylsäureisobutylesters oder Copolymerisate aus Methacrylsäuremethylester und Acrylsäurebutylester oder Methacrylsäureisobutylester, Acrylsäureäthylester und Acrylsäureäthylhexylester in Frage.

Als feinteilige Kunstharze bevorzugt sind Vinylchloridhomopolymerisate und Vinylchloridcopolymerisate mit Vinylacetat.

Geeignet sind ebenfalls Gemische der oben genannten Kunstharze, sowie Gemische mit feinteiligen Polyurethankunststoffen, wie Gemische aus Polyvinylchlorid und Polyurethan, wie sie beispielsweise der DE-OS 19 44 310 zu entnehmen sind.

Im allgemeinen weisen die feinteiligen Kunstharze Teilchendurchmesser von 1 bis 200, vorzugsweise 5 bis 80 μm auf.

Die flüssige Phase der Plastisole wird im allgemeinen von Weichmachern gebildet.

Als Weichmacher eignen sich die üblichen, wie Trikresylphosphat, Acetyltributylcitrat, Diester der Phthalsäure, Adipinsäure und Sebazinsäure mit gesättigten und ungesättigten 1 bis 18 Kohlenstoffatome enthaltenden Alkoholen, z.B. Dioctylphthalat, Dinonylphthalat, Diallylphthalat, Didecylphthalat, sowie Weichmacher, die zu den Gruppen der gesättigten und ungesättigten flüssigen Polyester und der flüssigen Epoxidverbindungen gehören, wie z.B. epoxidiertes Ricinusöl oder Polyester aus Adipinsäure und Butandiol. Der Gehalt an Weichmachern wird bei den Plastisolen so bemessen, daß er ausreichend ist, um ein Plastisol von flüssiger bis pastenförmiger Konsistenz zu bilden.

Die flüssige Phase der Plastisole kann auch darin gelöste Bindemittel enthalten, die physikalisch trocknend und/oder chemisch vernetzend sein können. Auch polymerisierbare Monomeren der verschiedensten Substanzklassen können gegebenenfalls zusammen mit geeigneten Aktivatoren in den Weichmachern mitverwendet werden.

Feinteiliges Kunstharz und Weichmacher sind in der erfindungsgemäßen Dispersionen im allgemeinen in einem Gewichtsverhältnis Kunstharz/Weichmacher von 10 bis 70 %/30 bis 90 %, vorzugsweise 40 bis 60 %/ 60 bis 40 % enthalten.

Das erfindungsgemäß zu verwendende isocyanatgruppenfreie Umsetzungsprodukt ist entweder

a. das Reaktionsprodukt aus einem Monoamin, gegebenenfalls in Kombination mit einer Polyaminoverbindung und einem Monoisocyanat und/oder Polyisocyanat oder

b. ein Reaktionsprodukt aus einer Polyaminverbindung und einem Monoisocyanat, gegebenenfalls in Kombination mit einem Polyisocyanat.

In einer vorteilhaften Ausführungsform wird ein Monoamin mit einem Polyisocyanat oder einem Monoisocyanat umgesetzt.

In einer anderen Ausführungsform kann das Monoamin auch mit einer Mischung aus einem Monoisocyanat und einem Polyisocyanat zur Reaktion gebracht werden.

Eine weitere Ausführungsform sieht vor, daß ein Monoamin zusammen mit einer Polyaminoverbindung mit einem Polyisocyanat umgesetzt wird.

Es kann aber auch vorteilhaft sein, eine Mischung eines Monoamins und einer Polyaminverbindung mit einem Monoisocyanat oder einem Polyisocyanat oder einer Mischung aus einem Monoisocyanat und einem Polyisocyanat umzusetzen.

In einer weiteren vorteilhaften Ausführungsform wird eine Polyaminverbindung mit einem Monoisocyanat zur Reaktion gebracht. Es kann aber auch vorteilhaft sein, die Polyaminverbindung mit einer Mischung aus einem Monoisocyanat und einem Polyisocyanat zur Reaktion zu bringen.

In vielen Fällen ist es zweckmäßig, den Dispersionen mit den erfindungsgemäßen Umsetzungsprodukten noch zusätzlich ein isocyanatfreies Umsetzungsprodukt einer Polyaminverbindung mit einem Polyisocyanat hinzuzufügen.

Zu den einzelnen Reaktionskomponenten ist folgendes zu sagen:

Als Monoamine eignen sich insbesondere verzweigtkettige oder geradkettige aliphatische Monoamine mit gesättigten oder nicht gesättigten Gruppen, z.B. N-n-Alkenylamine, N-n-Alkylamine oder N-sec.-Alkylamine. Geeignet sind ferner cycloaliphatische Amine und Hydroxymonoamine. Beispielhaft seien als geeignete Monoamine erwähnt: Benzylamine, Cyclohexylamin, Äthylamin, n-Propylamin, sek.-Propylamin, n-Butylamin, sek.-Butylamin, tert.-Butylamin, n-Pentylamin, -Methylbutylamin, Äthylpropylamin, β-Äthylbutylamin und Methylbutylamin. Bevorzugt verwendet werden Monoamine mit 1 - 4 aliphatischen Kohlenstoffatomen, wie Benzylamin, Propylamin und tert.-Butylamin. Geeignete Hydroxymonoamine sind Monohydroxyamine, wie 2-Aminoäthanol, 1-Amino-äthanol, 2-Aminopropanol, 3-Aminopropanol, 1-Amino-2-propanol, 2-Amino-2-methyl-propanol, 2-Aminobutanol, 2-Aminobutanol, 2-Aminopentanol und Polyhydroxymonoamine, wie 2-Amino-2-methyl-1,3-propandiol und 2-Amino-2-äthyl-1,3-propandiol. Alternativ können Gemische von einem oder

3

mehreren Monoaminen und einem oder mehreren Monohydroxyaminen und/oder Polyhydroxymonoaminen verwendet werden.

Als Polyaminverbindung eignen sich organische Verbindungen, die mehr als eine zur Reaktion mit Isocyanatgruppen befähigte Aminogruppe enthalten. Derartige Polyaminverbindungen sind beispielsweise solche mit primären oder sekundären Aminogruppen, wie Polyäthylenimin, Hexamethylendiamin, 1,2-Propylendiamin, Tetrapropylenpentamin, vorzugsweise höhermolekulare Polyamidamine, wie sie z.B. durch Umsetzung von Dicarbonsäuren, wie dimerisierten Fettsäuren mit einem Überschuß an mehrwertigen Aminen zu erhalten sind und Aminzahlen von 80 bis 500, vorzugswiese 200 bis 420 und Viskositäten von 1 bis 80 mPa.s aufweisen.

Eine typische Verbindung dieser Art hat z.B. eine Aminzahl von 360 bei einer Viskosität von ca. 32 Pa.s.

Als für die Umsetzung mit den Monoaminen und Polyaminverbindungen geeignete Polyisocyanate kommen Di- und Polyisocyanate in Frage, wie aliphatische, cycloaliphatische, araliphatische, aromatische und heterocyclische Polyisocyanate, z.B. Äthylendiisocyanat, 1,4-Tetramethylendiisocyanat, 1,6-Hexamethylendiisocyanat, 1,12-Dodecandiisocyanat, Cyclobutan-1,3-diisocyanat, Cyclohexan-1,3- und 1,4-diisocyanat sowie beliebige Gemische dieser Isomeren, 1-Isocyanato-3,3,5-tri-methyl-5-isocyanatomethylcyclohexan (DE-AS 12 02 785), 2,4- und 2,6-Hexahydrotoluylendiisocyanat sowie beliebige Gemische dieser Isomeren, Hexahydro-1,3- und/oder -1,4-phenylen-diisocyanat, Perhydro-2,4'- und/oder -4,4'-diisocyanat, 1,3- und 1,4-Phenylendiisocyanat, 2,4- und 2,6-Toluylendiisocyanat sowie beliebige Gemische dieser Isomeren, Diphenylmethan-2,4'- und/oder -4,4'-diisocyanat, Naphthylen-1,5-diisocyanat, Triphenylmethan-4,4',4''-triisocyanat, Polyphenyl-polymethylen-polyisocyanate (erhalten durch Anilin-Formaldehyd-Kondensation und anschließende Phosgenierung nach den GB-PS 874 430 und 848 671), perchlorierte Arylpolyisocyanate (vgl. DE-AS 11 57 601), Carbodiimidgruppen aufweisende Polyisocyanate (vgl. DE-PS 10 92 007), Diisocyanate gemäß US-PS 3 492 330, Allophanatgruppen aufweisende Polyisocyanate (vgl. GB-PS 994 890, BE-PS 761 626 und NL-PA 71 02 524), Isocyanuratgruppen aufweisende Polyisocyanate (vgl. DE-PS 10 22 789, 12 22 067 und 10 27 394; DE-OS 19 29 034 und 20 04 048), Urethangruppen aufweisende Polyisocyanate (vgl. BE-PS 752 261 und US-PS 3 394 164), acrylierte Harnstoffgruppen aufweisende Polyisocyanate (vgl. DE-PS 12 30 778), Biuretgruppen aufweisende Polyisocyanate (vgl. DE-PS 1 101 394; GB-PS 889 050; FR-PS 7 017 514), durch Telomerisationsreaktionen hergestellte Polyisocyanate (vgl. BE-PS 723 640), Estergruppen aufweisende Polyisocyanate (vgl. GB-PS 956 474 und 1 072 956; US-PS 3 567 763; DE-PS 1 231 688), oder auch Umsetzungsprodukte der oben genannten Isocyanate mit Acetalen (vgl. DE-PS 1 072 385).

Monoisocyanatverbindungen im Sinne der Erfindung sind aliphatische, aromatische und/oder cycloaliphatische Monoisocyanate. Die aliphatischen Monoisocyanate können beispielsweise bis zu 25 C-Atome aufweisen. Sowohl hier wei bei den aromatischen bzw. cycloaliphatischen Monoisocyanaten sind technisch leicht zugängliche und preiswerte Verbindungen besonders bevorzugt. Beispiele sind: Alkylisocyanat, Äthylisocyanat, Propylisocyanat, Butylisocyanat, Stearylisocyanat, sekundäre Alkylisocyanate wie tert.-Butylisocyanat und/oder aromatische Isocyanate wie Phenylisocyanat, 1-Naphthylisocyanat, Tolylisocyanate, Toluolsulfonylisocyanat oder auch cycloaliphatische Isocyanate wie Cyclohexylisocyanat.

Die Monoamine bzw. Polyaminverbindungen werden mit den Mono- und/oder Polyisocyanaten in solchen Mengenverhältnissen zur Reaktion gebracht, daß auf jede Isocyanatgruppe mindestens eine damit reaktionsfähige Aminogruppe kommt. Bevorzugt sind Umsetzungsprodukte, in welchen 5 bis 40 Äquivalent-% der Aminogruppen der Monoamine bzw. der Polyaminverbindung mit den Isocyanatgruppen des Mono- bzw. Polyisocyanats umgesetzt sind.

Die Umsetzung der Amine mit dem Isocyanat erfolgt im allgemeinen bei Temperaturen von 15 bis 50°C, gegebenenfalls in Gegenwart von geeigneten Lösungsmitteln, oder den für die Plastisolherstellung geeigneten Weichmachern.

Die erfindungsgemäßen Plastisole enthalten 0,01 bis 30, vorzugsweise 0,1 bis 1,5 Gew.% des isocyanatfreien Umsetzungsproduktes.

Von den erfindungsgemäß zu verwendenden isocyanatgruppenfreien Umsetzungsprodukten sind zur Einstellung einer vorgegebenen Fließgrenze nicht mehr als 10 % der Menge nötig, wie sie sonst zur Einstellung einer gleichen Fließgrenze durch Zusatz von feinteiligem Siliziumdioxid oder organisch modifiziertem Montmorillonit gebraucht werden. Trotz der gleich hohen Fließgrenze ist aber die Viskosität unter Scherbelastung wesentlich geringer als bei Einsatz der gebräuchlichen Verdicker, wodurch die Verarbeitbarkeit sehr viel besser ist.

Vorteilhaft ist auch, daß die Eigenschaften der Plastisole weniger durch artfremde Stoffe beeinträchtigt werden.

Die Plastisole können noch eine Reihe von Hilfsstoffen und Additive, z.B. zur Regulierung der Viskosität, der Geliergeschwindigkeit, der Verbesserung der Licht- und Wärmestabilität und der Lagerstabilität enthalten, sowie Pigmente, Farb- und Füllstoffe. Um die Haftung auf den zu beschichtenden Gegenständen weiter zu verbessern, können die Plastisole noch bekannte haftverbessernde Zusätze, wie Phenolaldehydharze oder Epoxidharze mit den entsprechenden Härterkomponenten aus Dicyandiamid, Aminen oder Polyaminoamiden, enthalten.

Die Herstellung der erfindungsgemäßen Plastisole kann in üblichen Mischaggregaten dadurch erfolgen, daß die Reaktionsprodukte aus Amin und Isocyanat bei der Mischung der Plastisolbestandteile oder dem fertigen Plastisol nachträglich zugesetzt werden.

Bevorzugt wird so verfahren, daß die Reaktionspartner bei der Plastisolherstellung getrennt eingerührt

4

werden und durch spontane chemische Reaktion die strukturbildenden Umsetzungsprodukte entstehen.

Die Beispiele sollen die Erfindung erläutern, ohne sie jedoch auf dieses Beispiel einzuschränken. Die in den Vergleichsbeispielen und dem Beispiel angegebenen Teile und Prozente sind, soweit nicht anders angegeben, Gewichtsteile und Gewichtsprozente.

**Vergleichsbeispiel 1**

| 23 | Teile | Emulsions-Polyvinylchlorid (Pasten-PVC), K-Wert 78 |
|----|-------|---------|
| 12 | " | Dioctylphthalat |
| 8 | " | Di-isodecylphthalat |
| 3 | " | epoxidiertes Sojaöl |
| 8 | " | Butyl-Benzyl-phthalat |
| 0,5 | " | Bariumstearat |
| 38 | " | Kreide (Calcit) |
| 1 | " | Eisenoxidschwarz |

werden im Planetenmischer 20 Minuten zu einer homogenen Paste verknetet und durch kurzes Anlegen von Vakuum entgast. Das erhaltene Plastisol ist von grauer Farbe.

**Vergleichsbeispiel 2**

| 23 | Teile | Emulsions-PVC (wie in Vergleichsbeispiel 1) |
|----|-------|---------|
| 14 | " | Dioctylphthalat |
| 8 | " | Di-isodecylphthalat |
| 3 | " | epoxidiertes Sojaöl |
| 8 | " | Butyl-Benzyl-phthalat |
| 1,5 | " | Polyamidamin (auf Basis keines Umsetzungsproduktes aus dimerisierter Leinölfettsäure mit einem Überschuß an Diäthylentriamin) (Aminzahl 290) |
| 0,5 | " | Bariumstearat |
| 38 | " | Kreide (Calcit) |
| 1 | " | Eisenoxidschwarz |

werden im Planetenmischer 20 Minuten zu einer homogenen Paste verknetet und durch kurzes Anlegen im Vakuum entgast.

**Vergleichsbeispiel 3**

| 23 | Teile | Emulsions-PVC (wie in Vergleichsbeispiel 1) |
|----|-------|---------|
| 14 | " | Dioctylphthalat |
| 8 | " | Di-isodecylphthalat |
| 3 | " | epoxidiertes Sojaöl |
| 8 | " | Butyl-Benzyl-phthalat |
| 1,5 | " | Polyamidamin (wie in Vergleichsbeispiel 2) (Aminzahl 290) |
| 0,5 | " | Bariumstearat |
| 3 | " | feinteiliges, amorphes $SiO_2$, ca. 200 m²/g |
| 38 | " | Kreide (Calcit) |
| 1 | " | Eisenoxidschwarz |

das $SiO_2$ wird zunächst im Dioctylphthalat mit einem Dissolver zu einem Gel aufgeschlossen, dann werden alle Bestandteile in einem Planetenmischer 20 Minuten zu einer homogenen Paste verknetet und durch kurzes Anlegen von Vakuum entgast.

**Vergleichsbeispiel 4**

| 23 | Teile | Emulsions-PVC (wie in Vergleichsbeispiel 1) |
|----|-------|---------|
| 14 | " | Dioctylphthalat |
| 8 | " | Di-isodecylphthalat |

| 3 | " | epoxidiertes Sojaöl |
| 8 | " | Butyl-Benzyl-phthalat |
| 1,5 | " | Polyamidamin (wie in Vergleichsbeispiel 2) (Aminzahl 290) |
| 0,5 | " | Bariumstearat |
| 5 | " | organisch modifiziertes Montmorillonit |
| 38 | " | Kreide (Calcit) |
| 1 | " | Eisenoxidschwarz |

Das organisch modifizierte Montmorillonit wird zunächst im Dioctylphthalat und Di-isodecylphthalat mit einem Dissolver zu einem Gel abgepastet, dann werden die übrigen Rezeptbestandteile mit diesem Gel zusammen in einem Planetenmischer 20 Minuten zu einer homogenen Paste verknetet und durch kurzes Anlegen von Vakuum entgast.

**Vergleichsbeispiel 5**

| 23 | Teile | Emulsions-PVC (wie in Vergleichsbeispiel 1) |
| 14 | " | Dioctylphthalat |
| 8 | " | Di-isodecylphthalat |
| 3 | " | epoxidiertes Sojaöl |
| 8 | " | Butyl-Benzyl-phthalat |
| 1,5 | " | Schiffsche Base ( = Haftvermittler B nach DE-OS 25 12 366, Seite 6) |
| 0,5 | " | Bariumstearat |
| 38 | ". | Kreide (Calcit) |
| 1 | " | Eisenoxidschwarz |

werden im Planetenmischer 20 Minuten zu einer homogenen Paste verknetet und durch kurzes Anlegen von Vakuum entgast.

**Vergleichsbeispiel 6**

| 23 | Teile | Emulsions-PVC (wie in Vergleichsbeispiel 1) |
| 14 | " | Dioctylphthalat |
| 8 | " | Di-isodecylphthalat |
| 3 | " | epoxidiertes Sojaöl |
| 8 | " | Butyl-Benzyl-phthalat |
| 1,5 | " | Schiffsche Base (Haftvermittler B nach DE-OS 25 12 366, Seite 6) |
| 0,5 | " | Bariumstearat |
| 3 | " | feinteiliges, amorphes $SiO_2$, ca. 200 m²/g |
| 38 | " | Kreide (Calcit) |
| 1 | " | Eisenoxidschwarz |

werden im Planetenmischer 20 Minuten zu einer homogenen Paste verknetet und durch kurzes Anlegen von Vakuum entgast.

**Vergleichsbeispiel 7**

| 23 | Teile | Emulsions-PVC (wie in den Vergleichsbeispielen) |
| 14 | " | Dioctylphthalat |
| 8 | " | Di-isodecylphthalat |
| 3 | " | epoxidiertes Sojaöl |
| 8 | " | Butyl-Benzyl-phthalat |
| 1,5 | " | Polyamidamin (wie in Vergleichsbeispiel 2) (Aminzahl 290) |
| 0,5 | " | Bariumstearat |
| 0,4 | " | ungereinigtes Methandiphenyl-diisocyanat (sog. Roh-MDI) |
| 38 | " | Kreide (Calcit) |
| 1 | " | Eisenoxidschwarz |

werden im Planetenmischer 20 Minuten zu einer homogenen Paste verknetet und durch kurzes Anlegen von Vakuum entgast.

**Beispiel 8** (erfindungsgemäß)

| 14 | Teile | Dioctylphthalat |
|---|---|---|
| 4 | " | C 12-C 14 n-Paraffingemisch |
| 8 | " | Diisodecylphthalat |
| 3 | " | epoxidiertes Sojaöl |
| 8 | " | Butyl-Benzyl-phthalat |
| 1,5 | " | Polyamidamin (wie in Vergleichsbeispiel 2) |
| 1,0 | " | Isopropylamin |
| | | mischen und unter starkem Rühren zutropfen |
| 2,68 | " | ungereinigtes Methandiphenyl-diisocyanat (sog. Roh-MDI) |
| | | es wird ein stark thixotropes Gel erhalten, zugefügt werden |
| 23 | " | E-PVC (wie Vergleichsbeispiele) |
| 0,5 | " | Bariumstearat |
| 38 | " | Kreide (Calcit) |
| 1 | " | Eisenoxidschwarz |

und in Planetenkneter 20 Min. zu einer homogenen Paste verknetet und durch Anlegen von Vakuum entgast.

**Beispiel 9** (erfindungsgemäß)

| 14 | Teile | Dioctylphthalat |
|---|---|---|
| 4 | " | C 12 - C 14 n-Paraffingemisch |
| 8 | " | Diisodecylphthalat |
| 3 | " | epoxidiertes Sojaöl |
| 8 | " | Butyl-Benzylphthalat |
| 2,14 | " | Benzylamin, mischen unter starkem Rühren dazu |
| 2,7 | " | Roh-MDI, es entsteht ein thixotropes Gel, dazu |
| 1,5 | " | Polyamidamin (wie Vergleichsbeispiel 2) und unter kräftigem Rühren |
| 0,4 | " | Roh-MDI, das thixotrope Gel wird weiter verdickt, zugefügt werden |
| 23 | " | E-PVC (wie Vergleichsbeispiele) |
| 0,5 | " | Bariumstearat |
| 38 | Teile | Kreide (Calcit) |
| 1 | " | Eisenoxidschwarz, |

im Planetenkneter 20 Min. zu einer homogenen Paste verknetet und durch Anlegen von Vakuum entgast.

**Beispiel 10** (erfindungsgemäß)

| 14 | Teile | Dioctylphthalat |
|---|---|---|
| 4 | " | C 12- C 14 n-Paraffingemisch |
| 8 | " | Diisodecylphthalat |
| 3 | " | epoxidiertes Sojaöl |
| 8 | " | Butyl-Benzylphthalat |
| 2,14 | " | Benzylamin, mischen unter kräftigem Rühren zufügen |
| 2,7 | " | Roh-MDI, es entsteht ein thixotropes Gel, dazu |
| 1,5 | " | Polyamidamin (wie im Vergleichsbeispiel 2) |
| 23 | " | E-PVC (wie Vergleichsbeispiele) |
| 0,5 | " | Bariumstearat |
| 38 | " | Kreide (Calcit) |
| 1 | " | Eisenoxidschwarz, |

im Planetenkneter in 20 Min. zu einer homogenen Paste verkneten und im Vakuum entlüften.

# 0 076 395

**Beispiel 11** (erfindungsgemäß)

| 14 | Teile | Dioctylphthalat |
|---|---|---|
| 4 | " | C 12 - C 14 n-Paraffingemisch |
| 8 | " | Diisodecylphthalat |
| 3 | " | epoxidiertes Sojaöl |
| 8 | " | Butyl-Benzylphthalat |
| 2,95 | " | Stearylisocyanat |
| 0,5 | " | Roh-MDI mischen und unter kräftigem Rühren dazu |
| 3,05 | " | Polyamidamin (wie Vergleichsbeispiel 2), es wird ein thixotropes Gel erhalten, dazu |
| 23 | Teile | E-PVC wie in den Vergleichsbeispielen |
| 0,5 | " | Bariumstearat |
| 38 | " | Kreide (Calcit) |
| 1 | " | Eisenoxidschwarz, |

im Planetenkneter in 20 Min. zu einer homogenen Paste verkneten und im Vakuum entgasen.

Zur Prüfung der Haftfestigkeit werden elektrotauchgrundierte Blechstreifen mit den Pasten überlappend verklebt und in einer Zerreißmaschine die zur Trennung der Verklebung erforderliche Kraft vermessen.

Zur Prüfung auf Standfestigkeit werden eine Reihe von Filmen mit steigender Schichtdicke aus diesen Pasten auf Blechtafeln aufgerakelt und senkrecht hängend 20 Minuten bei 170°C eingebrannt. Es wird geprüft bis zu welcher Schichtdicke die Pasten standfest sind, d.h. nicht mehr ablaufen. Diese Schichtdicke soll möglichst hoch sein, die ohne Scherbelastung in den Pasten aufgebaute Strukturviskosität muß also recht stabil sein, um das Eigengewicht dicker Schichten zu halten. Die Viskosität wird in einem Rotationsviskosimeter unter Scherung von $D = 356.s^{-1}$ gemessen, diese soll möglichst klein sein, um gute Verarbeitbarkeit in einer airless-Spritzanlage zu gewährleisten. Zur Beurteilung der Verarbeitbarkeit werden die Pasten außerdem auf einer airless-Spritzanlage verspritzt.

## Vergleichstabelle

| Beispiele bzw. Vergleichs- beispiele | Stand- festigkeit (bis mm Dicke) | Viskosität (mpas) bei $D = 356s^{-1}$ | Verspritz- barkeit | Verlauf | Haftung (N/cm$^2$) |
|---|---|---|---|---|---|
| 1 | läuft ab | 2150 | gut | sehr gut | <10 |
| 2 | läuft sb | 1780 | gut | sehr gut | 182 |
| 3 | 3. | 4750 | schlecht | schlecht | 151 |
| 4 | 4 | 8350 | sehr schlecht | sehr schlecht | 124 |
| 5 | läuft ab | 2028 | gut | gut | 82 |
| 6 | 3 | 5236 | schlecht | schlecht | 51 |
| 7 | 7 | 2580 | gut | gut | 246 |
| 8 | 7 | 1904 | sehr gut | sehr gut | 258 |
| 9 | 9 | 1804 | sehr gut | sehr gut | 250 |
| 10 | 7 | 1697 | sehr gut | sehr gut | 268 |
| 11 | 7 | 1840 | sehr gut | sehr gut | 217 |

Aus der Tabelle ist zu ersehen, daß die Dispersionen, in denen die erfindungsgemäßen Umsetzungsprodukte enthalten sind, sich auf eine niedrige Viskosität einstellen lassen und trotzdem eine hervorragende Standfestigkeit zeigen. Diese Eigenschaftskombination ergibt sehr gute Verspritzbarkeit und sehr guten Verlauf ohne Abtropfneigung, auch in dicken Schichten. Wie aus der Spalte für Haftung zu sehen ist, wirken die erfindungsgemäßen Umsetzungsprodukte zudem als hervorragende Haftungsvermittler.

## Patentansprüche

1. Dispersionen aus feinteiligen Kunstharzen auf Basis von Vinylchloridhomo- oder -copolymerisaten und/oder Acrylathomo- oder -copolymerisaten ggf. im Gemisch mit feinteiligen thermoplastischen Polyurethankunststoffen in Weichmachern, die ggf. Pigmente, Füllstoffe und weitere Hilfsmittel enthalten, dadurch gekennzeichnt, daß sie 0,01 bis 30 Gew.-%, bezogen auf die Summe der Gewichtsmengen an Kunstharz und Weichmacher, eines isocyanatgruppenfreien Umsetzungsproduktes

8

a) eines Monoamins, ggf. in Kombination mit einer Polyamin-Verbindung mit einem Monoisocyanat und/oder Polyisocyanat oder

b) einer Polyamin-Verbindung mit einem Monoisocyanat, ggf. in Kombination mit einem Polyisocyanat enthalten.

2. Dispersionen nach Anspruch 1, dadurch gekennzeichnet, daß sie zusätzlich ein isocyanatgruppenfreies Umsetzungsprodukt einer Polyaminverbindung mit einem Polyisocyanat enthalten.

3. Dispersionen nach Anspruch 1 oder 2, dadurch gekennzeichnet, daß im isocyanatgruppenfreien Umsetzungsprodukt 5 bis 40 Äquivalent-Prozent der Aminogruppen der Polyaminverbindung mit den Isocyanatgruppen des Polyisocyanats umgesetzt wird.

4. Verwendung der Dispersionen nach den Ansprüchen 1 bis 3 für Beschichtungen auf gegebenenfalls vorbehandelten Metallgegenständen.

5. Verwendung der Dispersionen nach einem der Ansprüche 1 bis 3 als Verklebemassen, Abdichtungsmassen oder Antidröhnmassen für Metallgegenstände.

6. Verwendung der Dispersionen nach einem der Ansprüche 1 bis 3 als Unterbodenschutzmasse für Kraftfahrzeuge.

7. Verwendung der Dispersionen nach einem der Ansprüche 1 bis 3 zur Herstellung von gegebenenfalls verstärkten Folien.

8. Verwendung der Dispersionen nach einem der Ansprüche 1 bis 3 zur Herstellung von Formkörpern durch Rotationsguß oder Heiß- und Kalttauchen.

## Claims

1. A dispersion of finely divided synthetic resins based on vinyl chloride homo- or -copolymers and/or acrylate homo- or -copolymers, if appropriate mixed with finely divided thermoplastic polyurethane plastics in plasticizers which contain pigments, fillers and further auxiliaries, wherein they contain 0.01 to 30% by weight, relative to the total weight of synthetic resin and plasticizer, of an isocyanate-free reaction product of

a. a monoamine, if appropriate combined with a polyamine compound, with a monoisocyanate and/or polyisocyanate or

b. a polyamine compound with a monoisocyanate, if appropriate combined with a polyisocyanate.

2. A dispersion as claimed in claim 7, which additionally contains a isocyanate-free reaction product of a polyamine compound with a polyisocyanate.

3. A dispersion as claimed in claim 1 or 2, wherein, in the isocyanate-free reaction product, 5 to 40 equivalent per cent of the amino groups of the polyamine compound are reacted with the isocyanate groups of the polyisocyanate.

4. The use of a dispersion as claimed in claims 1 to 3, for coating metal articles which may have been pretreated.

5. The use of a dispersion as claimed in any of claims 1 to 3, as an adhesive material, sealing material or anti-drumming material for metal articles.

6. The use of a dispersion as claimed in any of claims 1 to 3, as an underseal composition for motor vehicles.

7. The use of a dispersion as claimed in any of claims 1 to 3, for the manufacture of foils which may be reinforced.

8. The use of a dispersion as claimed in any of claims 1 to 3, for the manufacture of shaped articles by rotational casting or hot and cold dipping.

## Revendications

1. Dispersions de résines synthétiques en fines particules, à base de produits d'homo- ou copolymérisation de chlorure de vinyle et/ou de produits d'homo- ou copolymérisation d'acrylate, éventuellement en mélange avec des matières synthétiques thermoplastiques de polyuréthanne en fines particules, dans des plastifiants, qui contiennent éventuellement des pigments, charges et autres adjuvants, caractérisées par le fait qu'elles contiennent 0,01 à 30 % en poids, relativement au total des quantités en poids de résine synthétique et de plastifiant, d'un produit de réaction, exempt de groupes isocyanate

a) d'une monoamine, éventuellement en association avec un composé de polyamine, avec un monoisocyanate et/ou polyisocyanate ou

b) d'un composé polyamine avec un monoisocyanate, éventuellement en association avec un polyisocyanate.

2. Dispersions selon la revendication 1, caractérisées par le fait qu'elles contiennent en outre un produit de réaction, exempt de groupes isocyanate, d'un composé polyamine avec un polyisocyanate.

3. Dispersions selon l'une des revendications 1 et 2, caractérisées par le fait que dans le produit de réaction exempt de groupes isocyanate, on fait réagir 5 à 40 équivalents % des groupes amine du composé polyamine sur les groupes isocyanate du polyisocyanate.

4. Utilisation des dispersions selon l'une des revendications 1 à 3, pour des revêtements sur des objets

9

métalliques éventuellement prétraités.

5. Utilisation des dispersions selon l'une des revendications 1 à 3 comme masses de collage, masses d'étanchéité ou masses d'insonorisation pour objets métalliques.

6. Utilisation des dispersions selon l'une des revendications 1 à 3, comme masse de protection de bas de caisse pour véhicules automobiles.

7. Utilisation des dispersions selon l'une des revendications 1 à 3, pour la fabrication de feuilles, éventuellement renforcées.

8. Utilisation des dispersions selon l'une des revendications 1 à 3, pour la fabrication de pièces moulées par moulage par rotation ou immersion à chaud et à froid.